# EUROPÄISCHE PATENTSCHRIFT

(11) **EP 4 300 220 B1**
(45) Veröffentlichungstag und Bekanntmachung des Hinweises auf die Patenterteilung: **04.06.2025**
(21) Anmeldenummer: 22182567.2
(22) Anmeldetag: 01.07.2022
(51) Int. Cl.: G05B 19/042, G05B 19/418, H04L 67/12, H04L 69/28

(54) **SAFETY-KOMMUNIKATIONSVERFAHREN UND KOMMUNIKATIONSVORRICHTUNG**
SAFETY COMMUNICATION METHOD AND COMMUNICATION DEVICE
PROCÉDÉ DE COMMUNICATION DE SÉCURITÉ ET DISPOSITIF DE COMMUNICATION

(43) Veröffentlichungstag der Anmeldung: 03.01.2024
(73) Patentinhaber: Siemens Aktiengesellschaft, 80333 München (DE)
(72) Erfinder: Walter, Markus, 96050 Bamberg (DE); Hog, Ronny, 92245 Kümmersbruck (DE); Schötz, Sebastian, 92256 Hahnbach (DE)
(74) Vertreter: Siemens Patent Attorneys

(56) Entgegenhaltungen:
- US-A1- 2020 186 379
- "Industrial communication networks - Profiles - Part 3-3: Functional safety fieldbuses - Additional specifications for CPF 3", IEC 61784-3-3:2016, IEC, 3, RUE DE VAREMBÉ, PO BOX 131, CH-1211 GENEVA 20, SWITZERLAND, 12 July 2016 (2016-07-12), pages 1 - 302, XP082004463

## Beschreibung

Die vorliegende Erfindung betrifft ein Safety-Kommunikationsverfahren und eine Kommunikationsvorrichtung für ein Safety-Kommunikationssystem sowie ein Safety-Kommunikationssystem und ein Steuerungssystem mit einer solchen Kommunikationsvorrichtung.

Obwohl die vorliegende Erfindung nachfolgend in Zusammenhang mit einem Steuerungssystem für eine technische Anlage beschrieben wird, ist die vorliegende Erfindung nicht auf derartige Anlagen beschränkt. Vielmehr kann der erfindungsgemäße Kommunikationsansatz auf beliebige technische Vorrichtungen angewendet werden.

In technischen Anlagen, wie sie beispielsweise in industriellen Systemen eingesetzt werden, werden zu Steuerung- und Regelzwecken sehr oft Daten zwischen einzelnen Komponenten ausgetauscht. Beispielsweise können Informationen von Sensoren, Messfühlern, etc. an eine Steuerungseinrichtung übermittelt werden. Die Steuerungseinrichtung kann daraufhin unter Verwendung dieser Daten Steuerbefehle an Aktoren, wie beispielsweise Motoren, Ventile, etc. übermitteln, um diese Aktoren anzusteuern.

Fällt dabei eine Komponente, wie beispielsweise ein Sensor o. ä. aus, oder ist die Datenübertragung von der Komponente zu der Steuerungseinrichtung gestört, so kann die Steuerungseinrichtung keine weiteren Daten von der jeweiligen Komponente empfangen. Folglich kann die Steuerungseinrichtung auch nicht auf mögliche Änderungen reagieren. Ist die Datenübertragung zu einem Aktor gestört oder fällt ein Aktor aus, so können die Steuerungsbefehle durch diesen Aktor auch nicht mehr umgesetzt werden. Hierdurch können gegebenenfalls unkontrollierte bzw. gefährliche Betriebsbedingungen entstehen.

Um daher Fehler in dem Datenaustausch erkennen zu können, existieren sogenannte Safety-Kommunikationsverfahren. Ziel dieser Safety-Kommunikationsverfahren ist es, einen Fehler bzw. Störung in dem Datenaustausch zwischen zwei Instanzen zu erkennen, um daraufhin bei Bedarf geeignete Maßnahmen, wie zum Beispiel eine Notabschaltung o. ä. einzuleiten.

In der IEC 61784-3-3 Edition 3.0, 12.07.2016, wird die Kommunikation auf funktional sicheren Feldbussen beschrieben.

Vor diesem Hintergrund ist ein Kommunikationsverfahren wünschenswert, welches möglichst rasch eine Störung oder einen Fehler in einer Kommunikationsverbindung erkennen kann. Insbesondere ist dabei ein Kommunikationsverfahren wünschenswert, welches eine Safety-Kommunikation ermöglicht, die auf bereits bestehende Kommunikationsverfahren bzw. Kommunikationsstandards aufbauen kann und wobei diese bestehenden Verfahren auf einfache Weise derart angepasst werden können, sodass eine raschere Detektion von Störungen in einer Kommunikationsverbindung erreicht werden kann.

Die vorliegende Erfindung schafft ein Safety-Kommunikationsverfahren und eine Kommunikationsvorrichtung für ein Safety-Kommunikationssystem sowie ein Safety-Kommunikationssystem und ein Steuerungssystem mit den Merkmalen der unabhängigen Patentansprüche. Weitere vorteilhafte Ausführungsformen sind Gegenstand der abhängigen Patentansprüche.

Gemäß einem ersten Aspekt ist ein Safety-Kommunikationsverfahren zwischen einer primären Instanz und einer sekundären Instanz vorgesehen. Das Verfahren umfasst einen Schritt, in dem eine primäre Instanz ein Anfrage-Datentelegramm mit einer Überwachungskennung an eine sekundäre Instanz sendet. Ferner umfasst das Verfahren einen Schritt, bei dem die sekundäre Instanz ein Antwort-Datentelegramm mit der gleichen Überwachungskennung an die primäre Instanz zurücksendet. Darüber hinaus umfasst das Verfahren einen Schritt, in welchem die primäre Instanz einen Fehler in der Kommunikation detektiert, falls die erste Instanz nicht innerhalb einer vorgegebenen Timeout-Zeitdauer nach dem Aussenden des Anfrage-Datentelegramms ein Antwort-Datentelegramm mit einer zu dem Anfrage-Datentelegramm korrespondierenden Überwachungskennung empfangen hat. Insbesondere wird in diesem Verfahren die Überwachungskennung für ein Anfrage-Datentelegramm jeweils nach dem Aussenden einer vorbestimmten Anzahl von Anfrage-Datentelegrammen modifiziert.

Gemäß einem weiteren Aspekt ist eine Kommunikationsvorrichtung für ein Safety-Kommunikationssystem vorgesehen. Diese Kommunikationsvorrichtung ist dazu ausgelegt, ein Anfrage-Datentelegramm mit einer Überwachungskennung an eine weitere Kommunikationsvorrichtung zu senden. Ferner ist die Kommunikationsvorrichtung dazu ausgelegt, ein Antwort-Datentelegramm von der weiteren Kommunikationseinrichtung zu empfangen, wobei das Antwort-Datentelegramm die gleiche Überwachungskennung umfasst wie das korrespondierende Anfrage-Datentelegramm. Die Kommunikationsvorrichtung ist darüber hinaus dazu ausgelegt, einen Fehler in der Kommunikation zwischen der Kommunikationsvorrichtung und der weiteren Kommunikationsvorrichtung zu detektieren. Insbesondere kann ein Fehler in der Kommunikation detektiert werden, wenn nicht innerhalb einer vorgegebenen Timeout-Zeitdauer nach dem Aussenden des Anfrage-Datentelegramms ein Antwort-Datentelegramm mit der zu dem Anfrage-Datentelegramm korrespondierenden Überwachungskennung empfangen worden ist. Schließlich ist die Kommunikationsvorrichtung ferner dazu ausgelegt ist, die Überwachungskennung für ein Anfrage-Datentelegramm jeweils nach dem Aussenden einer vorbestimmten Anzahl von Anfrage-Datentelegrammen zu modifizieren.

Gemäß einem weiteren Aspekt ist ein Safety-Kommunikationssystem mit einer erfindungsgemäßen Kommunikationsvorrichtung und einer weiteren Kommunikationsvorrichtung vorgesehen. Die weitere Kommunikationsvorrichtung ist dazu ausgelegt, ein Anfrage-Datentelegramm von der Kommunikationsvorrichtung zu empfangen. Ferner ist bei der Kommunikationsvorrichtung dazu ausgelegt, ein Antwort-Datentelegramm zu der Kommunikationsvorrichtung zu senden. Das Antwort-Datentelegramm umfasst dabei die gleiche Überwachungskennung, wie ein zuvor empfangenes Anfrage-Datentelegramm.

Gemäß noch einem weiteren Aspekt ist ein Steuerungssystem mit einer erfindungsgemäßen Kommunikationsvorrichtung, und einer Steuereinrichtung vorgesehen. Die Steuereinrichtung ist hierbei dazu ausgelegt, einen Steuerbefehl unter Verwendung eines Antwort-Datentelegrams zu generieren.

In konventionellen Safety-Kommunikationsverfahren, wie beispielsweise Open Platform Communication Unified Architecture (OPC UA) oder einer PROFIsafe, kann beispielsweise ein Datentelegramm durch eine Lebenszeichen-Kennung, wie z.B. eine sogenannte Monitor Number (MNR), ergänzt werden. Dabei wird den ausgesendeten Datentelegrammen so lange dieselbe Lebenszeichen-Kennung beigefügt, bis von einem Kommunikationspartner eine Antwort mit dieser Lebenszeichen-Kennung empfangen worden ist. Wird innerhalb einer vorgegebenen Zeitspanne dabei keine Antwort mit einer entsprechenden Lebenszeichen-Kennung empfangen, so kann dabei auf einen Kommunikationsfehler geschlossen werden. Da jedoch die Lebenszeichen-Kennung hierbei erst dann gewechselt wird, nachdem erstmalig eine Antwort mit einer vorherigen Lebenszeichen- Kennung empfangen wurde, sind die Intervalle für den Wechsel der Lebenszeichen-Kennung relativ hoch. Hierdurch kann bei ungünstigen Fehlerkonstellationen eine recht lange Zeitspanne zwischen dem Auftreten eines Fehlers und der Detektion dieses Fehlers vergehen. Die maximale Zeitspanne zwischen dem Auftreten des Fehlers und der Detektion eines Fehlers wird auch als worst case delay time (WCDT) bezeichnet.

Ausgehend von dieser Erkenntnis ist es eine Idee der vorliegenden Erfindung, ein Safety-Kommunikationsverfahren bereitzustellen, welches einen möglichen Fehler in der Kommunikation möglichst rasch erkennen kann. Für eine einfache Implementierung ist es dabei wünschenswert, möglichst auf bestehende Kommunikationsverfahren bzw. Standards aufzubauen und durch geschickte Modifikation einen Ansatz zu schaffen, der die maximale Zeitspanne zur Detektion eines Fehlers gegebenenfalls reduzieren kann.

Hierzu ist es erfindungsgemäß vorgesehen, eine Überwachungskennung, wie beispielsweise eine Monitoring Number (MNR), nicht erst dann zu modifizieren, nachdem eine Nachricht von einem Kommunikationspartner mit einer zuvor verwendete Überwachungskennung empfangen worden ist, sondern bereits vorher Nachrichten mit modifizierten Überwachungskennungen auszusenden. Hierbei kann dann für jede verwendete Überwachungskennung eine separate Überwachung gestartet werden. Mit anderen Worten, es wird für mehrere Überwachungskennungen gleichzeitig eine Überwachung der maximal zulässigen Timeout-Zeit durchgeführt. Somit kann bei ungünstigen Konstellationen zwischen dem Wechsel zu einer neuen Überwachungskennung und dem Auftreten eines Fehlers in der Kommunikation der aufgetretene Kommunikationsfehler schneller detektiert werden.

Hierdurch kann unter anderem auch schneller festgestellt werden, dass gegebenenfalls keine vertrauenswürdige und/oder aktuellen Informationen von den Kommunikationspartnern, wie beispielsweise Sensoren oder ähnlichem, mehr für die Steuerung eines Systems zur Verfügung stehen, und damit unter Umständen ein sicherer Weiterbetrieb eines solchen Systems nicht mehr gewährleistet ist. Aufgrund dieser verkürzten Diagnosezeit können somit auch aus einer Fehlerdetektion resultierende Maßnahmen, wie beispielsweise eine Notabschaltung oder ein Wechsel in einen sicheren Betriebsmodus, schneller eingeleitet werden. Hierdurch kann die Sicherheit des Systems gesteigert werden. Darüber hinaus kann auch das Analgendesign von technischen Anlagen aufgrund der verringerten maximalen Zeit bis zur einer Fehlerdetektion angepasst werden.

Gemäß einer Ausführungsform umfasst die Überwachungskennung ein Datenelement mit einem Zähler. Beispielsweise kann in der Überwachungskennung ein Datenelement vorgesehen sein, in welchem eine Zahl, wie zum Beispiel eine Monitoring Number (MNR), als Überwachungskennung übermittelt wird. In diesem Fall kann das Modifizieren der Überwachungskennung ein Erhöhen des Zählers umfassen. Zum Beispiel kann die in dem Datenelement der Überwachungskennung übermittelte Zahl jeweils um eins hoch gezählt werden. Hierdurch kann auf eine einfache Weise eine kontinuierlich wechselnde Überwachungskennung generiert werden. Erreicht der Zähler seinen größtmöglichen Wert, der beispielsweise durch die Länge des vorgesehenen Datenelement begrenzt sein kann, so kann der Zähler daraufhin zurückgesetzt werden und das Hochzählen beginnt von neuem.

Gemäß einer Ausführungsform werden die Anfrage-Datentelegramme von der primären Instanz zu der sekundären Instanz periodisch in vorbestimmten Zeitintervallen ausgesendet. Hierzu kann beispielsweise in der primären Instanz ein Zeitraster vorgegeben werden, sodass in jedem Zeitraster periodisch ein Anfrage-Datentelegramm ausgesendet wird. Auf diese Weise kann eine kontinuierliche Überwachung der Kommunikationsverbindung zwischen der primären und der sekundären Instanz realisiert werden.

Gemäß einer Ausführungsform wird eine Laufzeit zwischen dem Aussenden eines Anfrage-Datentelegramms und dem Empfang eines Antwort-Datentelegramms für eine fehlerfreie Kommunikation ermittelt. Ist diese Laufzeit bekannt, so kann die Timeout-Zeitdauer unter Verwendung der ermittelten Laufzeit in geeigneter Weise eingestellt werden. Für das Ermitteln der Laufzeit kann beispielsweise bei einer Initialisierung oder gegebenenfalls auch während des Betriebs eine Zeitspanne gemessen werden, welche von dem Aussenden eines Anfrage-Datentelegramms bis zum Empfang des entsprechenden Antwort-Datentelegramms vergeht. Gegebenenfalls kann hierzu noch ein vorbestimmter Toleranzzuschlag hinzuaddiert werden und dieser Wert als Time-out-Zeitdauer verwendet werden. Alternativ sind verständlich auch beliebige andere Verfahren zur Ermittlung der Laufzeit möglich. Beispielsweise kann auch jeweils die Zeitdauer für einzelne Abschnitte der Datenübertragung sowie für die Verarbeitung in den jeweiligen Instanzen berechnet oder auf andere Weise abgeschätzt werden, und anschließend können die einzelnen Zeitdauer zu einer Gesamtlaufzeit addiert werden. Auf diese Weise kann für die Timeout-Zeitdauer ein geeigneter Wert ermittelt werden, ab wann mit einem Fehler in der Datenübertragung zu rechnen ist.

Gemäß einer Ausführungsform kann die Anzahl der Anfrage-Datentelegramme, nach deren Aussenden die Überwachungskennung für ein Anfrage-Datentelegramm modifiziert wird, angepasst werden. Insbesondere kann diese Anzahl unter Verwendung der ermittelten Laufzeit zwischen dem Aussenden eines Anfrage-Datentelegramms und dem Empfang eines hierzu korrespondierenden Antwort-Datentelegramms eingestellt werden. Beispielsweise kann diese Anzahl derart eingestellt werden, dass eine Anzahl der Änderungen der Überwachungskennung zwischen dem Aussenden eines Anfrage-Datentelegramms mit einer Überwachungskennung und dem Empfang des hierzu korrespondierenden Antwort-Datentelegramms eine vorgegebene Obergrenze nicht überschreitet. Somit können die Anzahl der Verarbeitungsinstanzen zur Überwachung der Timeouts für die jeweiligen Überwachungsinstanzen auf diese vorgegebene Obergrenze beschränkt werden. Hierdurch kann unter anderem auch der Ressourcenbedarf, wie beispielsweise Rechenleistung und Speicherbedarf, für die Überwachung begrenzt werden.

Gemäß einer Ausführungsform wird für jeweils eine Überwachungskennung eine separate Überwachungsinstanz angelegt. Jede dieser Überwachungsinstanzen kann hierbei jeweils die vorgegebene Timeout-Zeit für die entsprechende Überwachungskennung eines ausgesendeten Anfrage-Datentelegramms überwachen. Mit anderen Worten, es werden für jede der Überwachungskennungen die an ein Anfrage-Datentelegramm angehängt wurde, und für die noch kein korrespondierendes Antwort-Datentelegramm empfangen wurde, jeweils eine Überwachungsinstanz angelegt. Diese Überwachungsinstanzen können beispielsweise jeweils eine Timeout- Komponente umfassen, die den Ablauf der Timeout-Zeit signalisiert.

Gemäß einer Ausführungsform kann das Anfrage-Datentelegramm und/oder das Antwort-Datentelegramm ein Datentelegramm einer Open Platform, OPC, Unified Architecture, UA, oder einer PROFIsafe Kommunikation umfassen. Diese Kommunikationsschemata spezifizieren bereits Datentelegramme für eine Safety-Kommunikation, wie sie auch für das erfindungsgemäße Konzept eingesetzt werden können. Die konventionellen Formen dieser Kommunikationsschemata sehen hierbei jedoch keine Erhöhung der Überwachungskennung vor, bevor ein Antwort-Datentelegramm mit einer zuvor generierten Überwachungskennung empfangen worden ist. Im Gegensatz hierzu kann bei dem erfindungsgemäßen Ansatz durch die anfragende Instanz bereits eine neue Überwachungskennung generiert und für Anfrage-Datentelegramme verwendet werden, bevor eine Antwort mit einer zuvor ausgesendeten Überwachungskennung empfangen worden ist.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

Weitere Merkmale und Vorteile der Erfindung werden nachfolgend anhand der Figuren erläutert. Dabei zeigen:
- FIG 1: eine schematische Darstellung eines Kommunikationssystems gemäß einer Ausführungsform;
- FIG 2: eine schematische Darstellung einer Kommunikationsvorrichtung gemäß einer Ausführungsform; und
- FIG 3: eine schematische Darstellung des Kommunikationsablaufs, wie er einem Verfahren gemäß einer Ausführungsform zugrunde liegt.

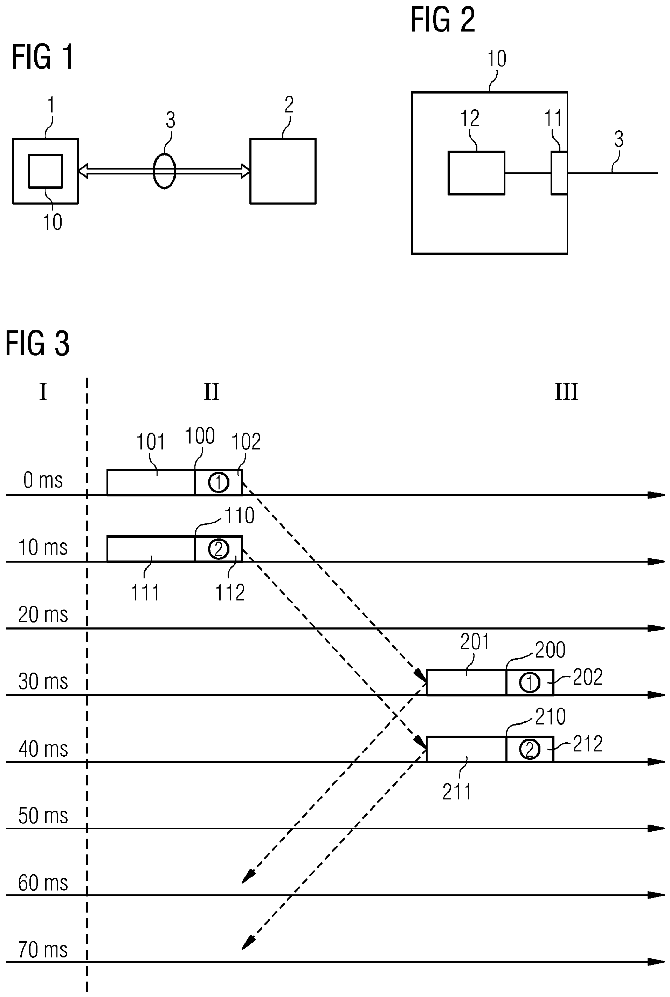

Figur 1 zeigt eine schematische Darstellung eines Safety-Kommunikationssystems gemäß einer Ausführungsform. Ein solches Safety-Kommunikationssystem umfasst mindestens eine primäre Instanz 1 sowie mindestens eine sekundäre Instanz 2. Die primären Instanzen 1 und die sekundären Instanzen 2 sind über ein Kommunikationsnetzwerk 3 kommunikativ miteinander verbunden.

Bei dem Kommunikationsnetzwerk 3 kann es sich grundsätzlich um ein beliebiges geeignetes Kommunikationsnetzwerk handeln, welches dazu geeignet ist, die nachfolgend noch näher erläuterten Datentelegramme zwischen den einzelnen Instanzen 1, 2 auszutauschen. Beispielsweise kann es sich hierbei um ein Bussystem handeln, über welches die einzelnen Instanzen 1, 2 die Datentelegramme austauschen können. Darüber hinaus sind auch beliebige andere Kommunikationsnetzwerke, insbesondere IP-basierte Netzwerke, beispielsweise kabelgebundene Netzwerke wie Ethernet oder kabellose Netzwerke (WLAN), sowie Mischformen möglich. Zwischen den einzelnen Instanzen 1, 2 können auch weitere Komponenten wie Hubs, Switches, Router, etc. vorgesehen sein.

Die Besonderheit eines Safety-Kommunikationssystems besteht unter anderem darin, dass der Datenaustausch zwischen den primären Instanzen 1 und den sekundären Instanzen 2 überwacht bzw. analysiert wird, um innerhalb einer vorgegebenen Zeitspanne einen möglichen Fehler oder eine Störung in der Kommunikation zwischen den Instanzen 1, 2 erkennen zu können. Wird ein solcher Fehler in der Kommunikation detektiert, so können vorbestimmte Maßnahmen, wie beispielsweise ein Übergang in einen Notbetrieb oder eine Abschaltung eines Systems eingeleitet werden.

Beispielsweise kann es sich bei einer primären Instanz 1 um eine Steuerungsvorrichtung handeln, welche Daten von einer oder mehrerer sekundärer Instanzen 2 empfängt. Auf Grundlage dieser empfangenen Daten kann die primäre Instanz 1 daraufhin beispielsweise Steuerbefehle generieren. Diese Steuerbefehle können entweder direkt innerhalb der primären Instanz ausgeführt werden, oder über das Kommunikationsnetzwerk 3 an eine oder mehrere sekundäre Instanzen 2 gesendet werden. Beispielsweise können in den sekundären Instanzen 2 Aktoren oder Ähnliches vorgesehen sein, welche die von der primären Instanz 1 generierten Steuerbefehle ausführen. Gegebenenfalls kann daraufhin die jeweilige sekundäre Instanz 2 eine entsprechende Bestätigung zurück an die primäre Instanz 1 zu senden, um den Empfang des Steuerbefehls und/oder das erfolgreiche Ausführen des Steuerbefehls bestätigen.

Figur 2 zeigt eine schematische Darstellung eines Blockschaubilds zur Veranschaulichung einer Kommunikationsvorrichtung 10 in einer primären Instanz 1. Eine solche Kommunikationsvorrichtung 10 kann beispielsweise eine Kommunikationsschnittstelle 11 umfassen. Diese Kommunikationsschnittstelle 11 kann mit dem zuvor beschriebenen Kommunikationsnetzwerk 3 gekoppelt werden somit kann die Kommunikationsschnittstelle 11 Datentelegramme über das Kommunikationsnetzwerk 3 zu einer sekundären Instanz 2 senden. Ferner kann die Kommunikationsschnittstelle 11 Datentelegramme von einer oder mehrerer sekundären Instanzen 2 empfangen. Die Datenschnittstelle 11 ist mit einer Verarbeitungseinrichtung 12 der Kommunikationsvorrichtung 10 gekoppelt. Somit kann die Verarbeitungseinrichtung 12 die von der Datenschnittstelle 11 empfangenen Datentelegramme erhalten, sowie Datentelegramme generieren, die mittels der Datenschnittstelle 11 über das Kommunikationsnetzwerk 3 an eine sekundäre Instanz 2 gesendet werden sollen.

Figur 3 zeigt ein Ablaufdiagramm zur Veranschaulichung des erfindungsgemäßen Safety-Kommunikationsverfahrens. In einer ersten Spalte I sind die Zeiteinheiten während des Ablaufs dargestellt. Die hier aufgeführten Zeitintervalle von 10 ms pro Zyklus sind dabei nur beispielhaft zu verstehen und sollen keine Einschränkung der vorliegenden Erfindung begründen. Grundsätzlich sind je nach Eigenschaften auch beliebige andere Zeitintervalle für einen Zyklus möglich. In Spalte II sind die von der primären Instanz ein gesendeten bzw. empfangenen Datentelegramme dargestellt. Analog sind in Spalte III die von der sekundären Instanz 2 empfangenen bzw. ausgesendeten Datentelegramme dargestellt.

In einem ersten dargestellten Zyklus kann die primäre Instanz 1 ein Anfrage-Datentelegramm 100 erstellen und an die sekundäre Instanz 2 senden. Ein solches Anfrage-Datentelegramm 100 kann neben Daten 101, wie zum Beispiel Statusinformationen oder einer Prüfsumme, eine Überwachungskennung 102 umfassen. Bei der Überwachungskennung 102 kann es sich um ein Datenelement beliebiger Größe handeln, welches den Daten 101 hinzugefügt wird. Beispielsweise kann es sich bei der Überwachungskennung 102 um eine Zahl handeln, die in einem zusätzlichen Datenfeld dem Anfrage-Datentelegramm 100 hinzugefügt wird. Zum Beispiel kann es sich bei der Überwachungskennung 102 um eine als Monitoring Number (MNR) bezeichnetes Datenelement handeln, wie es zum Beispiel gemäß dem PROFIsafe Kommunikationsverfahren genutzt wird. Grundsätzlich sind jedoch auch beliebige andere geeignete Datenkonstrukte möglich, die für die erfindungsgemäße Überwachung geeignet sind.

Das von der primären Instanz 1 ausgesendete Anfrage-Datentelegramm 100 wird daraufhin von der sekundären Instanz 2 empfangen. Die sekundäre Instanz 2 bearbeitet daraufhin die in dem Anfrage-Datentelegramm 100 enthaltene Anfrage und erstellt ein Antwort-Datentelegramm 200. Dieses Antwort-Datentelegramm 200 umfasst neben den Nutzdaten 201 ebenfalls eine Überwachungskennung 202. Diese Überwachungskennung 202 entspricht dabei der Überwachungskennung 102, welche in diesem Zyklus von der sekundären Instanz 2 empfangen worden ist. Somit sendet die sekundäre Instanz 2 ein Antwort-Datentelegramm 200 an die primäre Instanz 1, dessen Überwachungskennung 202 in der Überwachungskennung 102 in dem zu diesem Zeitpunkt empfangenen Anfrage-Datentelegramm 100 entspricht.

Das von der sekundären Instanz 2 gesendete Antwort-Datentelegramm 200 wird daraufhin von der primären Instanz 1 empfangen und ausgewertet. Hierbei wird auch die in dem Antwort-Datentelegramm 200 enthaltene Überwachungskennung 202 analysiert. Wird festgestellt, dass die in dem Antwort-Datentelegramm 200 enthaltene Überwachungskennung einer Überwachungskennung 102 in einem Anfrage-Datentelegramm 100 entspricht, das zuvor innerhalb einer vorgegebenen Timeout-Zeit ausgesendet wurde, so wird von der primären Instanz 1 festgestellt, dass die Kommunikation mit der sekundären Instanz 2 intakt ist. Stellt die primäre Instanz 1 dagegen fest, dass innerhalb der vorgegebenen Timeout-Zeit kein Antwort-Datentelegramm 200 empfangen worden ist, welches eine Überwachungskennung 202 enthält, die zu einer Überwachungskennung 102 in einem zuvor ausgesendeten Anfrage-Datentelegramm 100 entspricht, so detektiert die primäre Instanz 1 für diesen Fall einen Fehler in der Kommunikation mit der sekundären Instanz 2.

Für die Überwachung der Kommunikationsverbindung zwischen der primären Instanz 1 und der sekundären Instanz 2 wird in dem erfindungsgemäßen Safety-Kommunikationsverfahren dabei für ein weiteres Anfrage-Datentelegramme 110, welches nach dem Anfrage-Datentelegramme 100 von der primären Instanz 1 zu der sekundären Instanz bei gesendet wird, eine Überwachungskennung 112 verwendet, welche gegenüber der Überwachungskennung 102 eines zuvor ausgesendeten Anfrage-Datentelegramm zu 100 modifiziert wurde. Insbesondere wird dabei die Überwachungskennung 112 bereits dann gegenüber einer vorherigen 102 modifiziert, auch wenn noch kein Antwort-Datentelegramme 200 empfangen wurde, welches die zuvor ausgesendete Überwachungskennung 102 enthält. Beispielsweise kann die Überwachungskennung 102, 112 für jedes ausgesendete Anfrage-Datentelegramme 100, 110 modifiziert werden. Darüber hinaus ist es jedoch auch möglich, wie nachfolgend noch näher erläutert wird, dass jeweils mehrere Anfrage-Datentelegramme mit einer gleichen Überwachungskennung ausgesendet werden, bevor die Überwachungskennung modifiziert wird. Jedoch wird in jedem Fall die Überwachungskennung bereits modifiziert, bevor ein Antwort-Datentelegramme mit einer zuvor ausgesendeten Überwachungskennung empfangen wurde.

Im Gegensatz zu konventionellen Systemen, bei welchen die Überwachungskennung erst dann verändert wird, nachdem die primäre Instanz 1 ein Antwort-Datentelegramme mit einer zuvor ausgesendeten Überwachungskennung empfangen hat, kann durch eine frühzeitigere Modifikation Überwachungskennung unter Umständen eine Störung in der Kommunikation zwischen der Primärinstanz 1 und der sekundären Instanz 2 schneller detektiert werden.

Die Anfrage-Datentelegramme 100, 110 sowie die entsprechenden Antwort-Datentelegramme 200, 210 können dabei beispielsweise Datentelegramme entsprechen, wie sie aus Systemen wie Open Platform Communication Unified Architecture UPC UA oder PROFIsafe bekannt sind, wobei hierbei die in diesen Konzepten verwendete Monitoring Number (MNR) nicht erst hoch gezählt wird, nachdem ein Antwort-Datentelegramme empfangen worden ist, welches eine MNR eines zuvor ausgesendeten Anfrage-Datentelegramms enthält. Vielmehr kann erfindungsgemäß die MNR bereits erhöht werden, bevor in einem Antwort-Datentelegramm die MNR eines vorherigen Anfrage-Datentelegramme empfangen worden ist.

Grundsätzlich ist es möglich, die Überwachungskennung beim Aussenden jedes Anfrage-Datentelegramme 100, 110 zu modifizieren, beispielsweise durch Erhöhen der MNR. Darüber hinaus ist es auch möglich, die Überwachungskennung jeweils für eine vorgegebene Anzahl von Anfrage-Datentelegrammen eine gleiche Überwachungskennung zu verwenden und die Überwachungskennung erst dann zu modifizieren, nachdem die vorgegebene Anzahl von Anfrage-Datentelegramme mit einer gleichen Überwachungskennung ausgesendet worden ist. Alternativ ist es auch möglich die Überwachungskennung in vorbestimmten Zeitintervallen zu modifizieren.

Beim Aussenden eines Anfrage-Datentelegramme 100, 110 mit einer Überwachungskennung wird jeweils nach dem Modifizieren der Überwachungskennung, also beim Aussenden des ersten Anfrage-Datentelegramms mit einer neuen, modifizierten Überwachungskennung in der primären Instanz ein eine Überwachungsinstanz angelegt. Bei dieser Überwachungsinstanz kann es sich beispielsweise um einen Datenbereich in einem Speicher der Verarbeitungseinrichtung 12 handeln, in welchem die Informationen zu dieser Überwachungskennung abgespeichert sind. Gegebenenfalls können auch ein Timer in Form einer Hardwarekomponente oder eines Softwaremoduls initialisiert werden, um die Timeout-Zeit für diese Überwachungskennung überwachen.

Wird bei jedem Aussenden eines Anfrage-Datentelegramms 100, 110 jeweils eine neue Überwachungskennung erzeugt, so muss entsprechend auch jeweils eine neue Überwachungsinstanz angelegt werden. Werden dagegen mehrere Anfrage-Datenelemente mit einer gleichen Überwachungskennung nacheinander ausgesendet, so ist jeweils die gesamte Gruppe der Anfrage-Datentelegramme mit der gleichen Überwachungskennung nur eine einzige Überwachungsinstanz erforderlich. Entsprechend sinkt auch der Ressourcenbedarf in der Verarbeitungseinrichtung 12 bzw. der primären Instanz 1.

Die Timeout-Zeit, nach der ein Fehler in der Kommunikationsverbindung zwischen der primären Instanz 1 und der sekundären Instanz 2 detektiert wird, sollte in Abhängigkeit der Laufzeit für die Datenübertragung sowie die Verarbeitungszeit in der sekundären Instanz 2 gewählt werden. Insbesondere sollte diese Timeout-Zeit geringfügig größer gewählt werden, als die erforderliche Zeitspanne zwischen dem Aussenden des Anfrage-Datentelegramms und dem Empfangen eines korrespondierenden Antwort-Datentelegramms.

Gegebenenfalls ist es möglich, die Timeout-Zeit dynamisch anzupassen oder zumindest bei einer Initialisierung des Systems automatisch auf die jeweilige Systemkonfiguration einzustellen. Beispielsweise kann die primäre Instanz 1 die Laufzeit zwischen dem Aussenden eines Anfrage-Datentelegramms und dem Empfang eines korrespondierenden Antwort-Datentelegramms ermitteln und daraufhin die Timeout-Zeit automatisch einstellen. Die Timeout-Zeit kann hierbei gegenüber der ermittelten Laufzeit um eine vorgegebene Toleranz erhöht eingestellt werden.

Ferner ist es auch möglich, die Anzahl der Anfrage-Datentelegramme, welche jeweils eine gleiche Überwachungskennung enthalten sollen, einzustellen. Beispielsweise kann diese Anzahl derart angepasst werden, dass jeweils eine maximale Anzahl von Überwachungsinstanzen erforderlich ist. Dies kann beispielsweise auf Grundlage der Laufzeit zwischen dem Aussenden eines Anfrage-Datentelegramms und dem Empfang eines korrespondierenden Antwort-Datentelegramms festgelegt werden. Beispielsweise kann die Anzahl der Anfrage Datentelegramme mit der gleichen Überwachungskennung derart festgelegt werden, dass maximal 10 Überwachungsinstanzen (oder eine beliebige andere geeignete Anzahl) erforderlich sind.

Das zuvor beschriebene Konzept für eine Safety-Kommunikationsverfahren sowie das hierauf basierende Safety-Kommunikationssystem mit entsprechenden Kommunikationsvorrichtungen kann beispielsweise in beliebigen technischen bzw. industriellen Anlagen eingesetzt werden, bei welchen eine Steuerung mit einer kommunikativen Datenübertragung erforderlich ist. Beispielsweise kann ein solches Safety-Kommunikationsverfahren für speicherprogrammierbare Steuerungen (SPS) o. ä. genutzt werden. Darüber hinaus ist jedoch auch der Einsatz in beliebigen anderen technischen Systemen mit einer entsprechenden Datenübertragung möglich.

Wird durch die Safety-Kommunikation ein Fehler in der Datenübertragung detektiert, so können daraufhin beispielsweise vorbestimmte Maßnahmen bzw. Operationen ausgeführt werden. Zum Beispiel kann ein System nach der Detektion eines Fehlers in einen vorbestimmten Betriebszustand überführt werden. Ebenso ist es bei beispielsweise möglich, bei der Detektion eines Fehlers eine Notabschaltung o. ä. einzuleiten.

Zusammenfassend betrifft die vorliegende Erfindung eine Vorrichtung und ein Verfahren für das Überwachen einer Kommunikationsverbindung. Hierzu wird beim periodischen Aussenden einer Anfrage die Anfrage um eine spezifische Kennung ergänzt und ein Fehler detektiert, falls nicht innerhalb einer vorgegebenen Zeitspanne eine Antwort mit dieser Kennung empfangen wird. Die spezifische Kennung für mehrere nacheinander ausgesendete Anfragen wird hierbei bereits modifiziert, bevor eine Antwort mit einer zuvor ausgesendeten Kennung empfangen worden ist.

## Patentansprüche

1. Safety-Kommunikationsverfahren, wobei
eine primäre Instanz (1) ein Anfrage-Datentelegramm (100, 110) mit einer Überwachungskennung (102, 112) an eine sekundäre Instanz (2) sendet,
die sekundäre Instanz (2) ein Antwort-Datentelegramm (200, 210) mit der gleichen Überwachungskennung (202, 212) an die primäre Instanz (1) zurücksendet, und
die primäre Instanz (1) einen Fehler in der Kommunikation detektiert, falls die primäre Instanz (1) nicht innerhalb einer vorgegebenen Timeout-Zeitdauer nach dem Aussenden des Anfrage-Datentelegramms (100, 110) ein Antwort-Datentelegramm (200, 210) mit einer zu dem Anfrage-Datentelegramm (100, 110) korrespondierenden Überwachungskennung (202, 212) empfangen hat,
wobei die Überwachungskennung (102, 112) für ein Anfrage-Datentelegramm (100, 110) jeweils nach dem Aussenden eines Anfrage-Datentelegramms (100, 110) modifiziert wird,
wobei für jeweils eine Überwachungskennung (102, 112) eine separate Überwachungsinstanz angelegt wird, die jeweils die vorgegebene Timeout-Zeitdauer für die entsprechende Überwachungskennung (102, 112) eines ausgesendeten Anfrage-Datentelegramms (100, 110) überwacht,
wobei die primäre Instanz (1) bereits eine neue Überwachungskennung (102, 112) generiert und für weitere Anfrage-Datentelegramme (100, 110) verwendet, bevor eine Antwort mit einer zuvor ausgesendeten Überwachungskennung (102, 112) empfangen worden ist.

2. Safety-Kommunikationsverfahren nach Anspruch 1, wobei die Überwachungskennung (102, 112) ein Datenelement mit einem Zähler umfasst, und das Modifizieren der Überwachungskennung ein Erhöhen des Zählers umfasst.

3. Safety-Kommunikationsverfahren nach Anspruch 1 oder 2, wobei die Anfrage-Datentelegramme (100, 110) von der primären Instanz (1) zu der sekundären Instanz (2) periodisch in vorbestimmten Zeitintervallen ausgesendet werden.

4. Safety-Kommunikationsverfahren nach einem der Ansprüche 1 bis 3, wobei das Verfahren ferner eine Laufzeit zwischen dem Aussenden eines Anfrage-Datentelegramms (100, 110) und dem Empfang eines Antwort-Datentelegramms (200, 210) für eine fehlerfreie Kommunikation ermittelt, und die Timeout-Zeitdauer unter Verwendung der ermittelten Laufzeit eingestellt wird.

5. Safety-Kommunikationsverfahren nach einem der Ansprüche 1 bis 4, wobei das Anfrage-Datentelegramm (100, 110) und/oder das Antwort-Datentelegramm (200, 210) ein Datentelegramm einer Open Platform, OPC, Unified Architecture, UA, oder einer PROFIsafe Kommunikation umfasst.

6. Kommunikationsvorrichtung (10) für ein Safety-Kommunikationssystem, das dazu ausgelegt ist,
ein Anfrage-Datentelegramm (100, 110) mit einer Überwachungskennung (102, 112) an eine weitere Kommunikationsvorrichtung zu senden,
ein Antwort-Datentelegramm (200, 210) von der weiteren Kommunikationseinrichtung zu empfangen, wobei das Antwort-Datentelegramm (200, 210) die gleiche Überwachungskennung umfasst wie das korrespondierende Anfrage-Datentelegramm (100, 110), und
einen Fehler in der Kommunikation zwischen der Kommunikationsvorrichtung (10) und der weiteren Kommunikationsvorrichtung zu detektieren, wenn nicht innerhalb einer vorgegebenen Timeout-Zeitdauer nach dem Aussenden des Anfrage-Datentelegramms (100, 110) ein Antwort-Datentelegramm (200, 210) mit einer zu dem Anfrage-Datentelegramm (100, 110) korrespondierenden Überwachungskennung (202, 212) empfangen worden ist,
wobei die Kommunikationsvorrichtung (10) dazu ausgelegt ist, die Überwachungskennung (102, 112) für ein Anfrage-Datentelegramm (100, 110) jeweils nach dem Aussenden eines Anfrage-Datentelegramms (100, 110) zu modifizieren, weiterhin ausgestaltet für jeweils eine Überwachungskennung (102, 112) eine separate Überwachungsinstanz anzulegen, die jeweils vorgegebene Timeout-Zeitdauer für die entsprechende Überwachungskennung (102, 112) des ausgesendeten Anfrage-Datentelegramms (100, 110) zu überwachen, weiterhin ausgestaltet, bereits eine neue Überwachungskennung zu generieren und für weitere Anfrage-Datentelegramme zu verwenden, bevor eine Antwort mit einer zuvor ausgesendeten Überwachungskennung empfangen worden ist.

## Claims

1. Safety communication method, wherein
a primary instance (1) sends a request data telegram (100, 110) with a monitoring identifier (102, 112) to a secondary instance (2),
the secondary instance (2) returns a response data telegram (200, 210) with the same monitoring identifier (202, 212) to the primary instance (1), and
the primary instance (1) detects an error in communication if the primary instance (1) has not received a response data telegram (200, 210) with a monitoring identifier (202, 212) corresponding to the request data telegram (100, 110) within a predetermined timeout period (100, 110) after sending the request data telegram (100, 110);
wherein the monitoring identifier (102, 112) for a request data telegram (100, 110) is modified in each case after sending a request data telegram (100, 110),
wherein for each monitoring identifier (102, 112) a separate monitoring instance is created which monitors the predetermined timeout period for the corresponding monitoring identifier (102, 112) of a transmitted request data telegram (100, 110),
wherein the primary instance (1) already generates a new monitoring identifier (102, 112) and uses it for further request data telegrams (100, 110) before a response with a previously transmitted monitoring identifier (102, 112) has been received.

2. Safety communication method according to claim 1, wherein the monitoring identifier (102, 112) comprises a data element having a counter, and modifying the monitoring identifier comprises increasing the counter.

3. Safety communication method according to claim 1 or 2, wherein the request data telegrams (100, 110) are periodically sent from the primary instance (1) to the secondary instance (2) at predetermined periods of time.

4. Safety communication method according to one of claims 1 to 3, wherein the method further determines a runtime between sending a request data telegram (100, 110) and receiving a response data telegram (200, 210) for error-free communication, and the timeout period is set using the determined runtime.

5. Safety communication method according to one of claims 1 to 4, wherein the request data telegram (100, 110) and/or the response data telegram (200, 210) comprises a data telegram of an Open Platform, OPC, Unified Architecture, UA, or a PROFIsafe communication.

6. Communication apparatus (10) for a safety communication system which is designed to
send a request data telegram (100, 110) with a monitoring identifier (102, 112) to a further communication apparatus, to receive a response data telegram (200, 210) from the further communication facility, wherein the response data telegram (200, 210) comprises the same monitoring identifier as the corresponding request data telegram (100, 110), and to detect an error in communication between the communication apparatus (10) and the further communication apparatus if a response data telegram (200, 210) with a monitoring identifier (202, 212) corresponding to the request data telegram (100, 110) has not been received within a predetermined timeout period after sending the request data telegram (100, 110);
wherein the communication apparatus (10) is designed to modify the monitoring identifier (102, 112) for a request data telegram (100, 110) in each case after sending a request data telegram (100, 110), furthermore designed to create a separate monitoring instance for each monitoring identifier (102, 112), to monitor the predetermined timeout period in each case for the corresponding monitoring identifier (102, 112) of the transmitted request data telegram (100, 110), furthermore designed to already generate a new monitoring identifier and to use it for further request data telegrams, before a response with a previously transmitted monitoring identifier has been received.

## Revendications

1. Procédé de communication de sécurité, dans lequel
une instance (1) primaire envoie un télégramme (100, 110) de données de demande ayant une identification (102, 112) de contrôle à une instance (2) secondaire,
l'instance (2) secondaire renvoie un télégramme (200, 210) de données de réponse ayant la même identification (202, 212) de contrôle à l'instance (1) primaire, et
l'instance (1) primaire détecte une erreur dans la communication, si l'instance (1) primaire n'a pas reçu dans une durée de time out donnée à l'avance, après l'envoi du télégramme (100, 110) de données de demande, un télégramme (200, 210) de données de réponse ayant une identification (202, 212) de contrôle correspondant au télégramme (100, 110) de données de demande,
dans lequel on modifie l'identification (102, 112) de contrôle pour un télégramme (100, 110) de données de demande, respectivement après l'envoi d'un télégramme (100, 110) de données de demande,
dans lequel, pour respectivement une identification (102, 112) de contrôle, on applique une instance de contrôle distincte, qui contrôle respectivement la durée de time out donnée à l'avance pour l'identification (102, 112) de contrôle correspondante d'un télégramme (100, 110) de données de demande envoyé,
dans lequel l'instance (1) primaire crée déjà une nouvelle identification (102, 112) de contrôle et l'utilise pour d'autres télégrammes (101, 110) de données de demande, avant d'avoir reçu une réponse ayant une identification (102, 112) de contrôle envoyée auparavant.

2. Procédé de communication de sécurité suivant la revendication 1, dans lequel l'identification (102, 112) de contrôle comprend un élément de données ayant un compteur et la modification de l'identification de contrôle comprend une augmentation du compteur.

3. Procédé de communication de sécurité suivant la revendication 1 ou 2, dans lequel on envoie périodiquement, dans des intervalles de temps déterminés à l'avance, les télégrammes (100, 110) de données de demande de l'instance (1) primaire à l'instance (2) secondaire.

4. Procédé de communication de sécurité suivant l'une des revendications 1 à 3, dans lequel le procédé détermine, pour une communication sans défaut, en outre un temps de propagation entre l'émission d'un télégramme (100, 110) de données de demande et la réception d'un télégramme (200, 210) de données de réponse, et on règle la durée de time out en utilisant le temps de propagation déterminé.

5. Procédé de communication de sécurité suivant l'une des revendications 1 à 4, dans lequel le télégramme (100, 110) de données de demande et/ou le télégramme (200, 210) de données de réponse comprend un télégramme de données d'une open platform, OPC, unified architecture, UA, ou d'une communication PROFIsafe.

6. Installation (10) de communication pour un système de communication de sécurité, qui est conçu pour
envoyer un télégramme (100, 110) de données de demande ayant une identification (102, 112) de contrôle à une autre installation de communication,
recevoir un télégramme (200, 210) de données de réponse de l'autre installation de communication, dans lequel le télégramme (200, 210) de données de réponse comprend la même identification de contrôle que le télégramme (100, 110) de données de demande correspondant, et
détecter un défaut dans la communication entre l'installation (10) de communication et l'autre installation de communication si, dans une durée de time out donnée à l'avance après l'envoi du télégramme (100, 110) de données de demande, un télégramme (200, 210) de données de réponse ayant une identification (202, 212) de contrôle correspondant au télégramme (100, 110) de données de demande n'a pas été reçu,
dans lequel l'installation (10) de communication est conçue pour modifier l'identification (102, 112) de contrôle pour un télégramme (100, 110) de données de demande respectivement après l'envoi d'un télégramme (100, 110) de données de demande, étant en outre conformée pour appliquer, pour respectivement une identification (102, 112) de contrôle, une instance de contrôle distincte, qui contrôle la durée de timeout donnée à l'avance respectivement pour l'identification (102, 112) de contrôle correspondante du télégramme (100, 110) de données de demande envoyé, étant conformée en outre pour créer déjà une nouvelle identification de contrôle et pour l'utiliser pour d'autres télégrammes de données de demande, avant de recevoir une réponse ayant une identification de contrôle envoyée auparavant.
